# EUROPEAN PATENT SPECIFICATION

(11) **EP 4 246 691 B1**
(45) Date of publication and mention of the grant of the patent: **10.06.2026**
(21) Application number: 21950749.8
(22) Date of filing: 13.10.2021
(51) Int. Cl.: H01M 50/505, H01M 50/249, H01M 50/264, H01M 50/289, H01M 50/291, H01M 50/209

(54) **BATTERY MODULE, BATTERY AND POWER CONSUMPTION DEVICE**
BATTERIEMODUL, BATTERIE UND STROMVERBRAUCHGERÄT
MODULE DE BATTERIE, BATTERIE ET APPAREIL CONSOMMATEUR D'ÉNERGIE

(30) Priority: 21.07.2021 WO PCT/CN2021/107721
(43) Date of publication of application: 20.09.2023
(73) Proprietor: Contemporary Amperex Technology (Hong Kong) Limited, Central, Central And Western District (HK)
(72) Inventor: SUN, Zhanyu, Ningde, Fujian 352100 (CN); WANG, Lei, Ningde, Fujian 352100 (CN); CHEN, Xingdi, Ningde, Fujian 352100 (CN); WANG, Peng, Ningde, Fujian 352100 (CN)
(74) Representative: Gong, Jinping
(86) International application number: PCT/CN2021/123404
(87) International publication number: WO 2023/000511

(56) References cited:
- EP-A1- 2 658 008
- WO-A1-2016/128180
- WO-A1-2020/135103
- CN-A- 106 848 141
- CN-A- 111 009 629
- CN-A- 111 430 611
- CN-U- 204 067 459
- CN-U- 206 022 453
- CN-U- 207 217 617
- CN-U- 208 014 836
- CN-U- 212 659 640
- CN-U- 212 967 818
- JP-A- 2020 191 156

## Description

### CROSS-REFERENCE TO RELATED APPLICATIONS

The present application claims priority to International Application PCT/CN2021/107721, filed on July 21, 2021 and entitled "BATTERY, POWER CONSUMPTION DEVICE, AND METHOD AND DEVICE FOR PRODUCING BATTERY".

### TECHNICAL FIELD

The present application relates to the field of battery technologies, and in particular, to a battery module, a battery, a power consumption CN111009629A describes a battery pack comprising, inter alia, a structural reinforcement member fixedly connected to an individual battery cell.

### BACKGROUND

With the increasing environmental pollution, the new energy industry has attracted more and more attention from people. In the new energy industry, the battery technology is an important factor related to its development.

A space utilization ratio of an interior of a battery affects power and energy density of the battery, and further affects performance of the battery. How to improve performance of a battery is an urgent technical problem to be solved in the battery technology.

### SUMMARY

The present application provides a battery module as defined in claims 1 to 12, a battery as defined in claims 13 and 14, and a power consumption device as defined in claim 15, which could ensure structural strength of the battery while improving energy density of the battery, thereby improving performance of the battery.

In a first aspect, a battery module is provided, including: N columns of battery cells, each column of battery cells of the N columns of battery cells including a plurality of battery cells arranged in a first direction, the N columns of battery cells being arranged in a second direction, N being an integer greater than 1, and the first direction being perpendicular to the second direction; and N-1 spacer plate(s), a spacer plate extending in the first direction and being disposed between two adjacent columns of battery cells, and the spacer plate being fixedly connected to each battery cell in the two columns of battery cells; where an end part of the spacer plate in the first direction is provided with a fixing structure, and the fixing structure is configured to fix the spacer plate to a box body, where the box body is configured to accommodate the battery module; and wherein the fixing structure comprises a fixing plate, and the fixing plate is fixedly coupled to the end part of the spacer plate, and is fixedly coupled to a battery cell located at the end part of the spacer plate.

In an embodiment of the present application, a spacer plate is disposed between two adjacent columns of battery cells of a battery module, and the spacer plate is fixedly connected to each battery cell in the two columns of battery cells, a fixing structure is disposed at an end part of the spacer plate, and the spacer plate is fixed to a box body through the fixing structure. In this way, each battery cell in a battery is fixed to the box body by the spacer plate and the fixing structure, and thus each battery cell can transfer its load to the box body, ensuring structural strength of the battery. In this case, no side plate may be provided on an outer side of the battery module, and there is no need to provide a structure such as a beam in the middle of the box body, which can greatly improve a space utilization ratio of an interior of the battery, thereby improving energy density of the battery. Therefore, according to the technical solution of the embodiment of the present application, the structural strength of the battery could be ensured while improving the energy density of the battery, thereby improving performance of the battery.

In a possible implementation manner, a thickness of the spacer plate may be 0.1-5 mm, 0.2-2 mm, 0.3-1 mm, 0.1-0.5 mm, or 0.2-0.4 mm. Adopting the spacer plate with this thickness may reduce a space occupied by the spacer plate while ensuring the strength.

In a possible implementation manner, adjacent battery cells in each column of battery cells may also be bonded, for example, by structural glue. A fixing effect of the battery cells can be further enhanced through fixing between the adjacent battery cells in each column of battery cells.

In a possible implementation manner, the fixing structure includes a fixing plate, and the fixing plate is fixedly connected to the end part of the spacer plate, and is fixedly connected to a battery cell located at the end part of the spacer plate. In this way, the fixing effect of the battery cells may be further strengthened.

In a possible implementation manner, the fixing plate includes a first connecting part formed by extending in the first direction to a direction away from the battery module, and the first connecting part is configured to connect a wall of the box body.

Connecting a wall of the box body through a first connecting part can implement the fixed connection between the fixing plate and the wall of the box body, so that loads of the battery cells can be transferred to the wall of the box body, thereby ensuring the structural strength of the battery.

In a possible implementation manner, the first connecting part may be formed by bending the fixing plate. For example, the first connecting part may be formed by bending an edge of the fixing plate close to the connected wall in a direction away from the battery module. In this way, the first connecting part and a main body of the fixing plate are an integral structure, which can enhance connection performance.

In a possible implementation manner, the fixing plate further includes a second connecting part formed by extending in the first direction to a direction away from the battery module, and the second connecting part is configured to connect a first connecting strip, where the first connecting strip is configured to connect a plurality of battery modules in the box body.

Connecting a first connecting strip through a second connecting part can further ensure the structural strength of the battery at a position away from a bottom wall of the box body through the first connecting strip.

In a possible implementation manner, the second connecting part may be formed by bending the fixing plate. For example, the second connecting part may be formed by bending an edge of the fixing plate close to the first connecting strip in a direction away from the battery module. In this way, the second connecting part and the main body of the fixing plate are an integral structure, which can enhance the connection performance.

In a possible implementation manner, the fixing plate further includes a third connecting part formed by extending in the first direction to a direction away from the battery module, and the third connecting part is configured to connect the fixing plate to the spacer plate. Connecting the spacer plate through a third connecting part can implement the fixed connection between the fixing plate and the spacer plate, ensuring the connection performance between the two.

In a possible implementation manner, the third connecting part may be formed by bending the fixing plate. For example, the third connecting part may be formed by bending an edge of the fixing plate close to the spacer plate to a direction away from the battery module. In this way, the third connecting part and the main body of the fixing plate are an integral structure, which can enhance the connection performance.

In another aspect, a battery module is provided, including: N columns of battery cells, each column of battery cells of the N columns of battery cells including a plurality of battery cells arranged in a first direction, the N columns of battery cells being arranged in a second direction, N being an integer greater than 1, and the first direction being perpendicular to the second direction; and N-1 spacer plate(s), a spacer plate extending in the first direction and being disposed between two adjacent columns of battery cells, and the spacer plate being fixedly connected to each battery cell in the two columns of battery cells; where an end part of the spacer plate in the first direction is provided with a fixing structure, and the fixing structure is configured to fix the spacer plate to a box body, where the box body is configured to accommodate the battery module; and wherein the end part of the spacer plate protrudes from the N columns of battery cells in the first direction, and the fixing structure includes a first protrusion portion of the end portion of the spacer plate that protrudes from the N columns of battery cells in the first direction. Connecting the wall of the box body through a first protrusion portion can transfer loads of the battery cells to the wall of the box body, thereby ensuring the structural strength of the battery.

In a possible implementation manner, the fixing structure further includes a first extending part, the first extending part is fixedly connected to the first protrusion portion and extends in the second direction, and the first extending part is configured to connect a wall of the box body.

Connecting the wall of the box body through a first extending part can implement the fixed connection between the spacer plate and the wall of the box body, so that the loads of the battery cells can be transferred to the wall of the box body, thereby ensuring the structural strength of the battery.

In a possible implementation manner, the first extending part and the first protrusion portion may be integrally molded, which can enhance the connection performance.

In a possible implementation manner, the fixing structure further includes a second extending part, the second extending part is fixedly connected to the first protrusion portion and extends in the second direction, and the second extending part is configured to connect a first connecting strip, where the first connecting strip is configured to connect a plurality of battery modules in the box body.

Connecting a first connecting strip through a second connecting part can further ensure the structural strength of the battery at a position away from the bottom wall of the box body through the first connecting strip.

In a possible implementation manner, the second extending part and the first protrusion portion may be integrally molded, which can enhance the connection performance.

In a possible implementation manner, the battery module further includes: an attaching plate, the attaching plate extending in the first direction and being fixedly connected to the spacer plate, and the attaching plate protruding from the spacer plate in the second direction and being attached to each battery cell in the two adjacent columns of battery cells. Through an attaching plate, the fixing effect of the battery cells can be further strengthened.

In a possible implementation manner, the attaching plate is fixedly connected to each battery cell in the two adjacent columns of battery cells. In this way, each battery cell is fixed by the attaching plate and the spacer plate, so that the fixing effect could be further improved.

In a possible implementation manner, the attaching plate protrudes from the N columns of battery cells in the first direction, and the fixing structure includes a second protrusion portion of the attaching plate that protrudes from the N columns of battery cells in the first direction.

Connecting the wall of the box body through a second protrusion portion can transfer the loads of the battery cells to the wall of the box body, thereby ensuring the structural strength of the battery.

In a possible implementation manner, the spacer plate and the attaching plate are integrally molded. In this way, the connection performance between the spacer plate and the attaching plate can be improved.

In a possible implementation manner, N is 2. In this way, fewer spacer plates can be provided in the battery, but at the same time, it could be ensured that each battery cell can be fixed to the spacer plate and connected to the box body through the spacer plate and the fixing structure.

In a possible implementation manner, a battery cell is a cuboid battery cell, the cuboid battery cell includes two opposite first side walls and two opposite second side walls, an area of a first side wall is larger than an area of a second side wall, and the spacer plate is fixedly connected to the first side wall.

Narrow side walls of each column of battery cells are connected so as to be arranged in a column in the first direction; and the spacer plate is fixedly connected to a wide side wall of each battery cell. In this way, the spacer plate can more easily receive the loads of the battery cells, so as to facilitate the transfer of the loads of the battery cells to the box body.

In a possible implementation manner, the spacer plate has a hole provided correspondingly to the first side wall, and an area of the hole is smaller than the area of the first side wall. Providing a hole on the spacer plate can reduce the section material of the spacer plate, thereby reducing the weight of the spacer plate.

In a possible implementation manner, a battery cell is a cylindrical battery cell, and the spacer plate is an S-shaped spacer plate adapted to a side face of the cylindrical battery cell, so as to connect each battery cell better.

In a possible implementation manner, the spacer plate is a heat-insulated plate, a cooling plate or a heating plate. In this way, heat insulation between the battery cells or cooling or heating of the battery cell could be implemented while fixing the battery cell.

In a second aspect, a battery is provided, including: the battery module in the above first aspect or any possible implementation manner of the first aspect; and a box body, the box body being configured to accommodate the battery module.

In a possible implementation manner, the battery includes a plurality of battery modules, the plurality of battery modules are arranged in the second direction, and a gap is provided between adjacent battery modules.

In a battery module, a spacer plate is provided between two columns of battery cells, and no spacer plate is provided between adjacent battery modules. In this way, on one hand, the number of spacer plates in the interior of the battery can be reduced as much as possible; and on the other hand, a certain gap may be formed between the adjacent battery modules to provide an expansion space for the battery cells.

In a possible implementation manner, fixing plates corresponding to the plurality of battery modules are an integral structure. The fixing plates corresponding to the plurality of battery modules are a whole plate, and the plurality of battery modules are fixed on the box body through this whole plate, thereby improving the overall structural strength of the plurality of battery modules.

In a possible implementation manner, the fixing plate is provided with a restraint bar corresponding to the battery module, and the restraint bar is configured to be inserted into a gap between adjacent battery modules. This may facilitate installation of the battery modules.

In a possible implementation manner, the spacer plate and the box body are integrally molded, which can improve the connection performance between the spacer plate and the box body.

In a possible implementation manner, the battery further includes: a bus component configured to be electrically connected to battery cells; where at least three battery cells in the battery module are connected to a battery cell in another battery module through the bus component.

More battery cells are connected to a battery cell in another battery module through the bus component, and the connection performance between the battery modules can be enhanced through the bus component.

In a possible implementation manner, the bus component connects the battery cells in series in the second direction in the second direction. In this way, each pair of adjacent battery cells between adjacent battery modules can be connected through the bus component, thereby enhancing the connection performance between the battery modules.

In a possible implementation manner, the battery module is disposed on a bottom wall of the box body; and the battery further includes: a second connecting strip disposed on a surface of the battery module away from the bottom wall of the box body, the second connecting strip extending in the second direction, and being fixedly connected to a plurality of battery modules in the box body.

Through a second connecting strip, the battery cell can be constrained in the second direction to enhance the structural strength of the battery, and an expansion force of the battery cell can be resisted.

In a third aspect, a power consumption device is provided, including: the battery in the above second aspect or any possible implementation manner of the second aspect, the battery being configured to provide electric energy.

In a fourth aspect, a method for producing a battery is provided, including: providing a battery module, the battery module including: N columns of battery cells, each column of battery cells of the N columns of battery cells including a plurality of battery cells arranged in a first direction, and the N columns of battery cells being arranged in a second direction, N being an integer greater than 1, and the first direction being perpendicular to the second direction; and N-1 spacer plate(s), a spacer plate extending in the first direction and being disposed between two adjacent columns of battery cells, and the spacer plate being fixedly connected to each battery cell in the two columns of battery cells; where an end part of the spacer plate in the first direction is provided with a fixing structure; providing a box body; and accommodating the battery module in the box body, where the spacer plate is fixed to the box body through the fixing structure.

In a fifth aspect, a device for producing a battery is provided, including a module for executing the method in the above fourth aspect.

According to a technical solution of an embodiment of the present application, a spacer plate is disposed between two adjacent columns of battery cells of a battery module, the spacer plate is fixedly connected to each battery cell in the two columns of battery cells, a fixing structure is disposed at an end part of the spacer plate, and the spacer plate is fixed to a box body through the fixing structure. In this way, each battery cell in a battery is fixed to the box body by the spacer plate and the fixing structure, and thus each battery cell can transfer its load to the box body. Therefore, according to the technical solution of the embodiment of the present application, structural strength of the battery could be ensured while improving energy density of the battery, thereby improving performance of the battery.

### BRIEF DESCRIPTION OF THE DRAWINGS

In order to illustrate technical solutions in embodiments of the present application more clearly, brief description will be made below to accompanying drawings required in the embodiments of the present application. Apparently, the accompanying drawings described below are some embodiments of the present application only, and other drawings could be obtained based on these accompanying drawings by those ordinary skilled in this art without creative efforts.
FIG. 1 is a schematic diagram of a vehicle according to an embodiment of the present application;
FIG. 2 is a schematic diagram of a battery according to an embodiment of the present application;
FIG. 3 is a schematic diagram of a battery cell according to an embodiment of the present application;
FIG. 4 is a schematic diagram of a battery according to an embodiment of the present application;
FIG. 5 is a schematic diagram of a battery module according to an embodiment of the present application;
FIG. 6 is a schematic diagram of a battery module according to an embodiment of the present application;
FIG. 6a is a schematic diagram of a connection between a battery module and a box body according to an embodiment of the present application;
FIG. 6b is a schematic diagram of a connection between a battery module and a box body according to an embodiment of the present application;
FIG. 7 is a schematic diagram of a battery according to an embodiment of the present application;
FIG. 8 is a schematic diagram of a battery module according to an embodiment of the present application;
FIG. 9 is a schematic diagram of a battery module according to an embodiment of the present application;
FIG. 10 is a schematic diagram of a battery module according to an embodiment of the present application;
FIG. 11 is a schematic diagram of a spacer plate according to an embodiment of the present application;
FIG. 12 is a schematic diagram of an S-shaped spacer plate according to an embodiment of the present application;
FIG. 13 is a schematic flowchart of a method for producing a battery according to an embodiment of the present application; and
FIG. 14 is a schematic block diagram of a device for producing a battery according to an embodiment of the present application.

In the accompanying drawings, the accompanying drawings are not drawn to actual scale.

### DESCRIPTION OF EMBODIMENTS

Implementation manners of the present application will be further described below in detail with reference to drawings and embodiments. The detailed description of the following embodiments and the accompanying drawings are used to exemplarily illustrate principles of the present application, but cannot be used to limit the scope of the present application, that is, the present application is not limited to the described embodiments.

In the depiction of the present application, it should be noted that, unless otherwise illustrated, all technological and scientific terms used have the same meanings as those commonly understood by those skilled in the art to which the present application belongs. The terms used are merely for the purpose of describing specific embodiments, but are not intended to limit the present application. The terms "including" and "having" and any variations thereof in the specification and the claims of the present application as well as the brief description of the drawings described above are intended to cover non-exclusive inclusions. The meaning of "a plurality of" is two or more; and orientations or positional relationships indicated by terms such as "up", "down", "left", "right", "inside", and "outside" are merely for convenience of describing the present application and for simplifying the description, rather than for indicating or implying that an apparatus or element indicated must have a specific orientation, and must be constructed and operated in a specific orientation, which thus shall not be understood as limitation to the present application. In addition, the terms such as "first", "second", and "third" are merely intended for the purpose of description, and shall not be understood as an indication or implication of relative importance. "Vertical" is not strictly vertical, but within an allowable range of error. "Parallel" is not strictly parallel, but within an allowable range of error.

The phrase "embodiment" mentioned in the present application means that the specific features, structures, or characteristics described with reference to the embodiment may be included in at least one embodiment of the present application. The phrase at various locations in the specification does not necessarily refer to the same embodiment, or an independent or alternate embodiment that is mutually exclusive from another embodiment. Those skilled in the art understand, in explicit and implicit manners, that the embodiments described in the present application may be combined with another embodiment.

The terms representing orientations in the following description are all directions shown in the drawings, and do not limit the specific structure of the present application. In the description of the present application, it should be further noted that, unless otherwise explicitly specified and defined, terms "installation", "interconnection" and "connection" should be understood in a broad sense; for example, they may be either a fixed connection, or a detachable connection, or an integrated connection; and they may be either a direct connection, or an indirect connection through an intermediate medium, or communication between interiors of two elements. Those of ordinary skill in the art may appreciate the specific meanings of the foregoing terms in the present application according to specific conditions.

In the present application, the term "and/or" is only an association relation describing associated objects, which means that there may be three relations. For example, A and/or B may represent three situations: A exists alone, both A and B exist, and B exists alone. In addition, the character "/" in the present application generally indicates that the associated objects before and after the character are in an "or" relationship.

In the present application, a battery cell may include a lithium-ion secondary battery, a lithium-ion primary battery, a lithium-sulfur battery, a sodium/lithium-ion battery, a sodium-ion battery, a magnesium-ion battery, or the like, which is not limited in the embodiments of the present application. The battery cell may be cylindrical, flat, cuboid or in another shape, which is not limited in the embodiments of the present application. A battery cell is generally divided into three types according to the way of packaging: a cylindrical battery cell, a prismatic battery cell and a pouch battery cell, which is also not limited in the embodiments of the present application.

The battery mentioned in the embodiments of the present application refers to a single physical module including one or more battery cells to provide a higher voltage and capacity. For example, the battery mentioned in the present application may include a battery pack or the like. The battery generally includes a box body for packaging one or more battery cells. The box body can avoid liquid or other foreign matters to affect charging or discharging of the battery cell.

The battery cell includes an electrode assembly and an electrolytic solution, and the electrode assembly is composed of a positive electrode sheet, a negative electrode sheet and a separator. The operation of the battery cell mainly relies on movement of metal ions between the positive electrode sheet and the negative electrode sheet. The positive electrode sheet includes a positive electrode current collector and a positive electrode active material layer. The positive electrode active material layer is coated on a surface of the positive electrode current collector, the current collector not coated with the positive electrode active material layer protrudes from the current collector coated with the positive electrode active material layer, and the current collector not coated with the positive electrode active material layer is used as a positive electrode tab. In an example of a lithium-ion battery, the material of the positive electrode current collector may be aluminum, and the positive electrode active material may be lithium cobalt oxides, lithium iron phosphate, ternary lithium, lithium manganate, or the like. The negative electrode sheet includes a negative electrode current collector and a negative electrode active material layer. The negative electrode active material layer is coated on a surface of the negative electrode current collector, the current collector not coated with the negative electrode active material layer protrudes from the current collector coated with the negative electrode active material layer, and the current collector not coated with the negative electrode active material layer is used as a negative electrode tab. The material of the negative electrode current collector may be copper, and the negative electrode active material may be carbon, silicon, or the like. In order to ensure that no fusing occurs when a large current passes, there are a plurality of positive electrode tabs which are stacked together, and there are a plurality of negative electrode tabs which are stacked together. The material of the separator may be polypropylene (PP), polyethylene (PE), or the like. In addition, the electrode assembly may be a winding structure or a laminated structure, and the embodiments of the present application are not limited thereto.

In order to meet different power demands, the battery may include a plurality of battery cells, where the plurality of battery cells may be in series connection, parallel connection or series-parallel connection. The series-parallel connection refers to a combination of series connection and parallel connection. Optionally, the plurality of battery cells may be first connected in series, in parallel or in series and parallel to constitute a battery module, and then a plurality of battery modules are connected in series, in parallel or in series and parallel to constitute a battery. That is, the plurality of battery cells may directly constitute a battery, or may first constitute a battery module, and then battery modules constitute a battery. The battery is further disposed in a power consumption device to provide electrical energy for the power consumption device.

With the development of the battery technology, it is necessary to consider design factors in multiple aspects simultaneously, such as energy density, cycle life, discharge capacity, C-rate, and safety. Among them, when an internal space of the battery is fixed, improvement of a utilization ratio of the internal space of the battery is an effective means to improve the energy density of the battery. However, while improving the utilization ratio of the internal space of the battery, it is possible to reduce structural strength of the battery. For example, a beam used to mount the battery module is usually disposed in an interior of the box body of the battery. In addition, the battery module in the battery is also provided with a side plate and an end plate. The above-mentioned beam, side plate and end plate occupy the internal space of the battery while implementing the fixing of the battery. However, if the beam, the side plate and the end plate are not provided, the structural strength of the battery will be insufficient, and the performance of the battery will be affected.

In view of this, an embodiment of the present application provides a technical solution. A spacer plate is disposed between two adjacent columns of battery cells of a battery module, and the spacer plate is fixedly connected to each battery cell in the two columns of battery cells, and then fixed to a box body through a fixing structure. In this way, each battery cell in a battery is fixed to the box body by the spacer plate and the fixing structure, and can transfer its load to the box body, ensuring structural strength of the battery. In this case, no side plate may be provided on an outer side of the battery module, and there is no need to provide a structure such as a beam in the middle of the box body, which can greatly improve a space utilization ratio of an interior of the battery, thereby improving energy density of the battery. Therefore, according to the technical solution of the embodiment of the present application, the structural strength of the battery could be ensured while improving the energy density of the battery, thereby improving performance of the battery.

The technical solutions described in the embodiments of the present application are all applicable to various apparatuses using batteries, such as mobile phones, portable devices, notebook computers, electromobiles, electric toys, electric tools, electric vehicles, ships and spacecrafts. For example, the spacecrafts include airplanes, rockets, space shuttles, spaceships, and the like.

It should be understood that the technical solutions described in the embodiments of the present application are not only applicable to the devices described above, but also applicable to all devices using batteries. However, for brief description, the following embodiments are all described by an example of an electric vehicle.

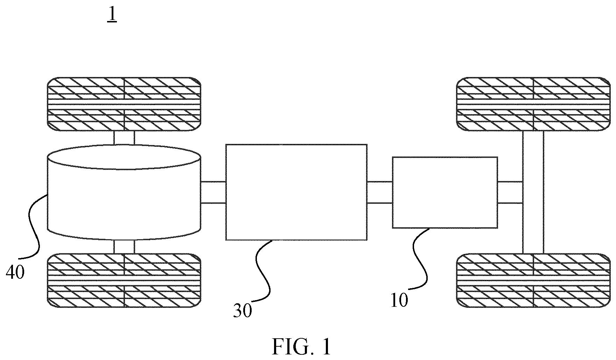

For example, as shown in FIG. 1, FIG. 1 is a schematic structural diagram of a vehicle 1 according to an embodiment of the present application. The vehicle 1 may be a fuel-powered vehicle, a gas-powered vehicle or a new energy vehicle, and the new energy vehicle may be a full electric vehicle, a hybrid electric vehicle, an extended-range vehicle, or the like. A motor 40, a controller 30 and a battery 10 may be disposed in an interior of the vehicle 1, and the controller 30 is configured to control the battery 10 to supply power to the motor 40. For example, the battery 10 may be disposed at the bottom, head or tail of the vehicle 1. The battery 10 may be configured to supply power to the vehicle 1. For example, the battery 10 may be used as an operation power source of the vehicle 1 for a circuit system of the vehicle 1, for example, for a working power demand of the vehicle 1 during startup, navigation and running. In another embodiment of the present application, the battery 10 may be used not only as an operation power source of the vehicle 1, but also as a driving power source of the vehicle 1, replacing or partially replacing fuel or natural gas to provide driving power for the vehicle 1.

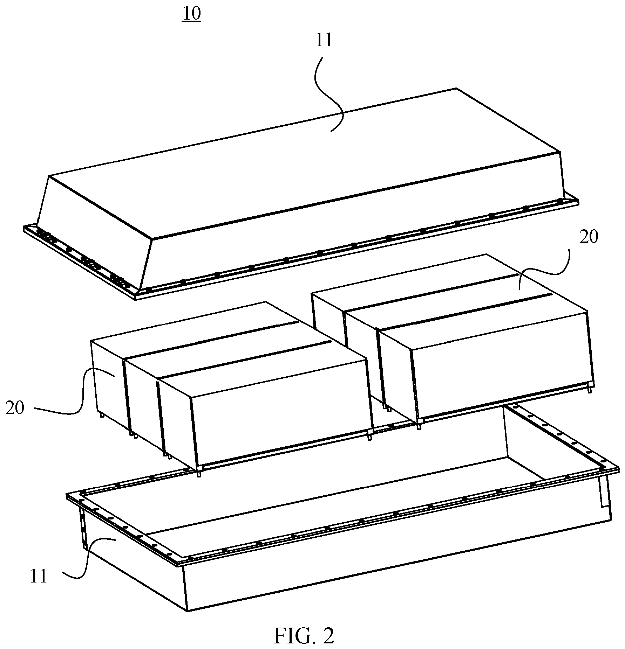

In order to meet different power usage demands, the battery 10 may include a plurality of battery cells. For example, as shown in FIG. 2, FIG. 2 is a schematic structural diagram of a battery 10 according to an embodiment of the present application. The battery 10 may include a plurality of battery cells 20. The battery 10 may further include a box body 11, an interior of the box body 11 is a hollow structure, and the plurality of battery cells 20 are accommodated in the box body 11. For example, the plurality of battery cells 20 are combined in parallel connection or series connection or series-parallel connection and then placed in the box body 11.

Optionally, the battery 10 may further include another structure, which will not be repeated redundantly herein. For example, the battery 10 may further include a bus component, and the bus component is configured to implement the electrical connection between the plurality of battery cells 20, such as parallel connection, series connection or series-parallel connection. Specifically, the bus component may implement the electrical connection between the battery cells 20 by connecting electrode terminals of the battery cells 20. Further, the bus component may be fixed to the electrode terminals of the battery cells 20 by means of welding. Electric energy of the plurality of battery cells 20 may be further led out through an electrically conductive mechanism to pass through the box body. Optionally, the electrically conductive mechanism may also belong to the bus component.

According to different power demands, the number of battery cells 20 may be set to any value. The plurality of battery cells 20 may be connected in series, in parallel or in series and parallel to implement a larger capacity or power. Since there may be many battery cells 20 included in each battery 10, the battery cells 20 may be arranged in groups for convenience of installation, and each group of battery cells 20 constitutes a battery module. The number of battery cells 20 included in the battery module is not limited and may be set according to demands. The battery may include a plurality of battery modules, and these battery modules may be connected in series, in parallel or in series and parallel.

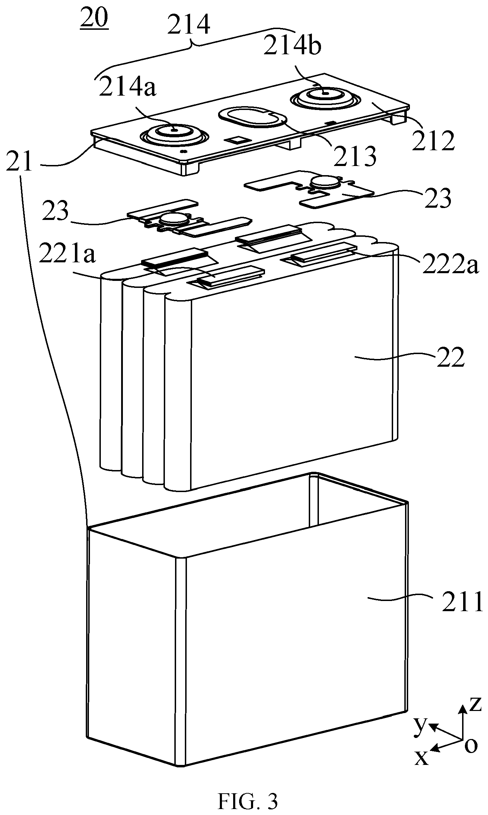

As shown in FIG. 3, FIG. 3 is a schematic structural diagram of a battery cell 20 according to an embodiment of the present application. The battery cell 20 includes one or more electrode assemblies 22, a housing 211 and a cover plate 212. The housing 211 and the cover plate 212 form a shell or a battery case 21. A wall of the housing 211 and the cover plate 212 each are referred to as a wall of the battery cell 20, where for a cuboid battery cell 20, the wall of the housing 211 includes a bottom wall and four side walls. The housing 211 is shaped according to a shape of the one or more electrode assemblies 22 after combination. For example, the housing 211 may be a hollow cuboid or cube or cylinder, and one face of the housing 211 has an opening, so that the one or more electrode assemblies 22 may be placed in the housing 211. For example, when the housing 211 is a hollow cuboid or cube, one plane of the housing 211 is a surface with an opening, that is, the plane does not have a wall, so that the inside and outside of the housing 211 are in communication with each other. When the housing 211 may be a hollow cylinder, an end face of the housing 211 is a surface with an opening, that is, the end face does not have a wall, so that the inside and outside of the housing 211 are in communication with each other. The cover plate 212 covers the opening and is connected to the housing 211 to form a closed cavity in which the electrode assemblies 22 are placed. The housing 211 is filled with an electrolyte, such as an electrolytic solution.

The battery cell 20 may further include two electrode terminals 214, and the two electrode terminals 214 may be disposed on the cover plate 212. The cover plate 212 is generally in a shape of a flat plate, and the two electrode terminals 214 are fixed on a flat plate face of the cover plate 212. The two electrode terminals 214 are a positive electrode terminal 214a and a negative electrode terminal 214b, respectively. Each electrode terminal 214 is correspondingly provided with a connecting member 23 also called as a current collecting member 23, which is located between the cover plate 212 and the electrode assembly 22 and configured to electrically connect the electrode assembly 22 to the electrode terminal 214.

As shown in FIG. 3, each electrode assembly 22 has a first electrode tab 221a and a second electrode tab 222a. The first electrode tab 221a and the second electrode tab 222a have opposite polarities. For example, when the first electrode tab 221a is a positive electrode tab, the second electrode tab 222a is a negative electrode tab. First electrode tabs 221a of the one or more electrode assemblies 22 are connected to one electrode terminal through one connecting member 23, and second electrode tabs 222a of the one or more electrode assemblies 22 are connected to the other electrode terminal through the other connecting member 23. For example, the positive electrode terminal 214a is connected to the positive electrode tab through one connecting member 23, and the negative electrode terminal 214b is connected to the negative electrode tab through the other connecting member 23.

In this battery cell 20, according to actual usage demands, the electrode assembly 22 may be set to be single or multiple in number. As shown in FIG. 3, four independent electrode assemblies 22 are disposed in the battery cell 20.

A pressure relief mechanism 213 may also be disposed on the battery cell 20. The pressure relief mechanism 213 is configured to be actuated when an internal pressure or temperature of the battery cell 20 reaches a threshold, to relieve the internal pressure or temperature.

The pressure relief mechanism 213 may be various possible pressure relief structures, which is not limited in the embodiments of the present application. For example, the pressure relief mechanism 213 may be a temperature-sensitive pressure relief mechanism, the temperature-sensitive pressure relief mechanism is configured to be capable of being melted when the internal temperature of the battery cell 20 provided with the pressure relief mechanism 213 reaches a threshold; and/or the pressure relief mechanism 213 may be a pressure-sensitive pressure relief mechanism, and the pressure-sensitive pressure relief mechanism is configured to be capable of being fractured when an internal gas pressure of the battery cell 20 provided with the pressure relief mechanism 213 reaches a threshold.

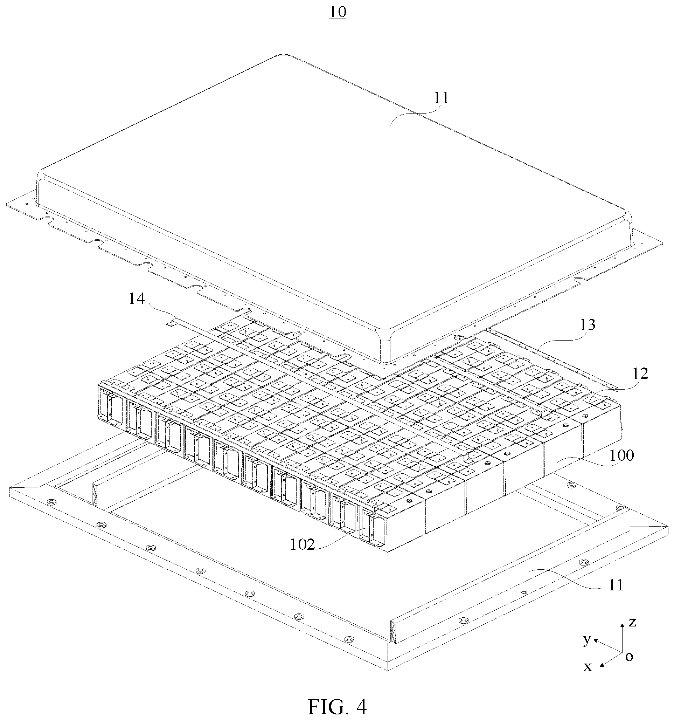

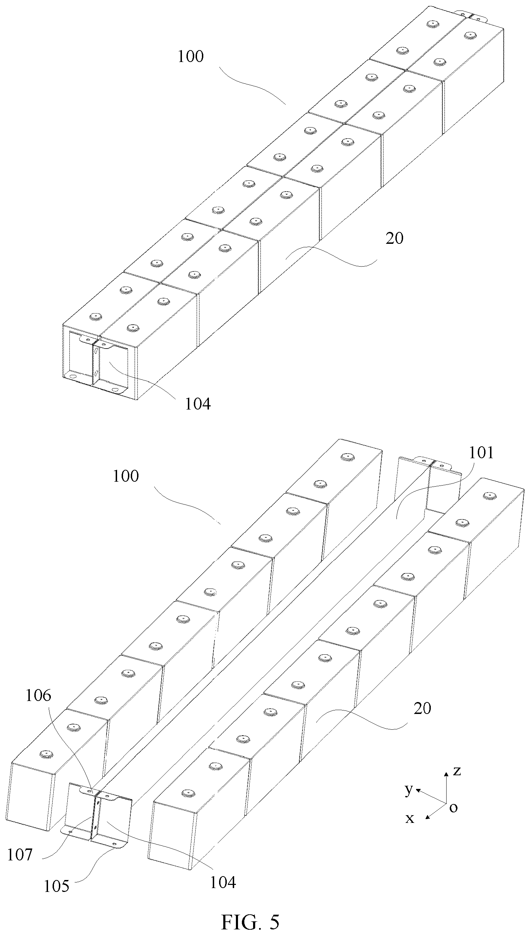

FIG. 4 shows a schematic structural diagram of a battery 10 according to an embodiment of the present application. As shown in FIG. 4, the battery 10 includes a battery module 100 and a box body 11. The battery module 100 is accommodated in the box body 11. FIG. 5 shows a schematic structural diagram of a battery module 100 according to an embodiment of the present application. As shown in FIG. 5, the battery module 100 may include N columns of battery cells 20 and N-1 spacer plate(s) 101. N is an integer greater than 1. In the drawings of the present application, N is 2 for example, that is, the battery module 100 includes two columns of battery cells 20 and one spacer plate 101, which is not limited in the embodiments of the present application. For example, the battery module 100 may include more columns of battery cells 20.

Each column of battery cells 20 of the N columns of battery cells 20 includes a plurality of battery cells 20 arranged in a first direction, for example, the x direction in FIG. 5. The N columns of battery cells 20 are arranged in a second direction, for example, the y direction in FIG. 5, and the first direction is perpendicular to the second direction. In other words, the first direction is a direction in which the battery cells 20 in each column of battery cells 20 are arranged, and the second direction is a direction in which the N columns of battery cells 20 are arranged.

The spacer plate 101 extends in the first direction and is disposed between two adjacent columns of battery cells 20, and the spacer plate 101 is fixedly connected to each battery cell 20 in the two columns of battery cells 20. As shown in FIG. 5, two adjacent columns of battery cells 20 may be respectively fixed to both sides of the spacer plate 101, that is, each battery cell 20 in the two adjacent columns of battery cells 20 may be fixedly connected through one spacer plate 101. For example, as shown in FIG. 5, the spacer plate 101 is provided vertically, that is, the spacer plate 101 is perpendicular to the second direction and is disposed between two columns of battery cells 20.

In the embodiment of the present application, the battery module 100 includes N columns of battery cells 20 and N-1 spacer plate(s) 101, and the N-1 spacer plate(s) 101 are disposed between the N columns of battery cells 20. That is, the spacer plate 101 is disposed in the interior of the battery module 100, and no spacer plate 101 is provided at the outer side of the battery module 100. For example, one spacer plate 101 is disposed between two columns of battery cells 20, two spacer plates 101 are disposed between three columns of battery cells 20, and so on. With such arrangement, fewer spacer plates 101 may be used such that each battery cell 20 in the battery module 100 can be fixedly connected by the spacer plate 101.

An end part of the spacer plate 101 in the first direction is provided with a fixing structure 102, and the spacer plate 101 is fixed to the box body 11 through the fixing structure 102. As shown in FIG. 5, fixing structures 102 are disposed at both ends of the spacer plate 101 in the x direction. The spacer plate 101 is fixed to the box body 11 through the fixing structures 102, so as to implement the fixing of the battery module 100 to the box body 11. As described above, each battery cell 20 in the battery module 100 is fixedly connected by the spacer plate 101, and then the fixed connection between each battery cell 20 and the box body 11 can be implemented through the fixing structure 102.

In the embodiment of the present application, the spacer plate 101 is disposed between two adjacent columns of battery cells 20 of the battery module 100, the spacer plate 101 is fixedly connected to each battery cell 20 in the two columns of the battery cells 20, the fixing structure 102 is disposed at the end part of the spacer plate 101, and the spacer plate 101 is fixed to the box body 11 through the fixing structure 102. In this way, each battery cell 20 in the battery 10 is fixed to the box body 11 by the spacer plate 101 and the fixing structure 102, and thus each battery cell 20 can transfer its load to the box body 11, ensuring structural strength of the battery 10. In this case, no side plate may be provided on an outer side of the battery module 100, and there is no need to provide a structure such as a beam in the middle of the box body 11, which can greatly improve a space utilization ratio of the interior of the battery 10, thereby improving energy density of the battery 10. Therefore, according to the technical solution of the embodiment of the present application, the structural strength of the battery 10 could be ensured while improving the energy density of the battery 10, thereby improving the performance of the battery 10.

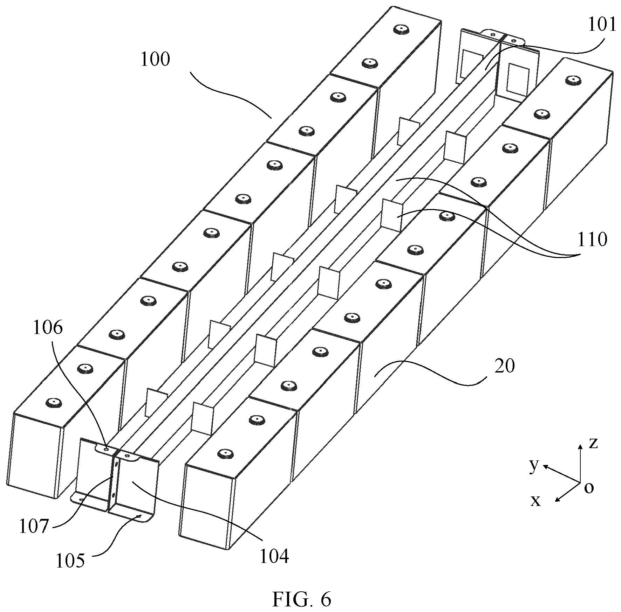

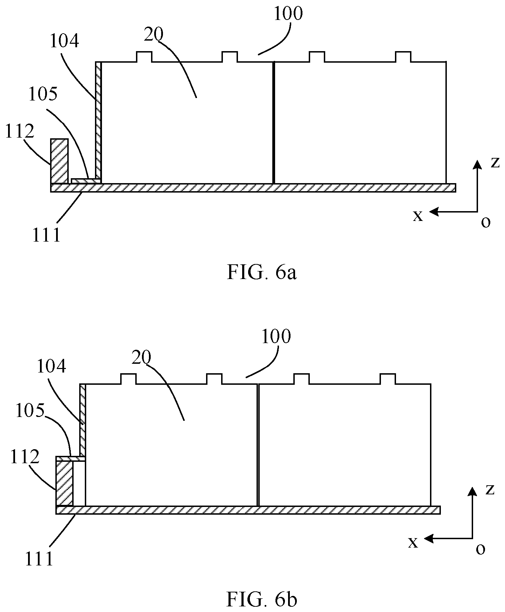

Optionally, the spacer plate 101 and each battery cell 20 in two adjacent columns of battery cells 20 may be fixedly connected by means of bonding. For example, in an embodiment of the present application, as shown in FIG. 6, the spacer plate 101 and each battery cell 20 in two adjacent columns of battery cells 20 may be bonded by structural glue 110, which is not limited in the embodiments of the present application.

Optionally, adj acent battery cells 20 in each column of battery cells 20 of the N columns of battery cells 20 may also be bonded, for example, as shown in FIG. 6, by the structural glue 110, which is not limited in the embodiments of the present application. The fixing effect of the battery cells 20 can be further enhanced by fixing between the adjacent battery cells 20 in each column of battery cells 20.

Optionally, the spacer plate 101 may be a metal plate, for example, a steel plate or an aluminum plate, or may be a plastic plate. A material of the spacer plate 101 may also be a composite material. For example, another material is coated on the surface of the metal plate, which is not limited in the embodiments of the present application.

Optionally, a thickness of the spacer plate 101 may be 0.1-0.5 mm. For example, in an embodiment of the present application, the thickness of the spacer plate 101 may be 0.2-0.4 mm. Adopting the spacer plate 101 with this thickness may reduce a space occupied by the spacer plate 101 while ensuring the strength.

Optionally, in an embodiment of the present application, the battery 10 includes a plurality of battery modules 100, the plurality of battery modules 100 are arranged in the second direction, and a gap is provided between adjacent battery modules 100. That is, the plurality of battery modules 100 are arranged in the y direction, no spacer plate 101 is provided between the adjacent battery modules 100, but a certain gap is provided therebetween. That is, in a battery module 100, a spacer plate 101 is disposed between two columns of battery cells 20, and no spacer plate is provided between adjacent battery modules 100. In this way, on one hand, the number of spacer plates 101 in the interior of the battery 10 can be reduced as much as possible; and on the other hand, a certain gap may be formed between the adjacent battery modules 10 to provide an expansion space for the battery cells 20.

Optionally, in an embodiment of the present application, the battery module 100 includes two columns of battery cells 20, that is, N is 2. Correspondingly, one spacer plate 101 is provided in the two columns of battery cells 20. As described above, no spacer plate 101 is provided between adjacent battery modules 100. In this way, fewer spacer plates 101 can be provided in the battery 10, but at the same time, it could be ensured that each battery cell 20 can be fixed to the spacer plate 101 and connected to the box body 11 through the spacer plate 101 and the fixing structure 102.

Optionally, in an embodiment of the present application, with respect to a battery module 100 including N columns of battery cells 20, N/2 spacer plate(s) 101 may be provided, where each spacer plate 101 is disposed between two adjacent columns of battery cells 20, and each column of battery cells 20 is fixedly connected to one spacer plate 101. For example, with respect to a battery module 100 including four columns of battery cells 20, two spacer plates 101 may be provided, where one spacer plate 101 is disposed between the first column and the second column of battery cells 20, and the other spacer plate 101 is disposed between the third column and the fourth column of battery cells 20; with respect to a battery module 100 including six columns of battery cells 20, three spacer plates 101 may be provided, where the first spacer plate 101 is disposed between the first column and the second column of battery cells 20, the second spacer plate 101 is disposed between the third column and the fourth column of battery cells 20, and the third spacer plate 101 is disposed between the fifth column and the sixth column of battery cells 20; and so on. Such setting could ensure that each battery cell 20 can be fixed to the spacer plate 101 and connected to the box body 11 through the spacer plate 101 and the fixing structure 102.

Optionally, in an embodiment of the present application, the fixing structure 102 may include a fixing plate 104. The fixing plate 104 is fixedly connected to the end part of the spacer plate 101, and is fixedly connected to a battery cell 20 located at the end part of the spacer plate 101. For example, for a cuboid battery cell 20, the fixing plate 104 may be vertically connected to the spacer plate 101, and the fixing plate 104 and the spacer plate 101 are respectively connected to two adjacent side walls of the cuboid battery cell 20, thereby further strengthening the fixing effect of the battery cells 20.

Optionally, the fixing plate 104 may be of the same material as the spacer plate 101, for example, metal, plastic or composite materials. A thickness of the fixing plate 104 may be the same as that of the spacer plate 101. The material or thickness of the fixing plate 104 may be different from that of the spacer plate 101. For example, the fixing plate 104 may be configured with higher strength or thickness, which is not limited in the embodiments of the present application.

Optionally, a connection manner between the spacer plate 101 and the fixing plate 104 may be resistance welding, resistance riveting, SPR riveting, locking bolts, clamping, or the like. The fixing plate 104 may be fixed to the box body through the connection manner such as resistance welding, resistance riveting, SPR riveting, locking bolts, or clamping, which is not limited in the embodiments of the present application.

Optionally, the fixing plate 104 and the battery cell 20 may be fixedly connected by means of bonding, such as by structural glue, which is not limited in the embodiments of the present application.

Optionally, in an embodiment of the present application, the fixing plate 104 includes a first connecting part 105 formed by extending in the first direction to a direction away from the battery module 100, and the first connecting part 105 is configured to connect a wall of the box body 11.

Optionally, as shown in FIG. 6a, the first connecting part 105 may be connected to a bottom wall 111 of the box body 11. In this case, at a position of the fixing plate 104 close to the bottom wall 111, the first connecting part 105 may be formed by extending in a direction away from the battery module 100, that is, outwardly, and the bottom wall 111 of the box body 11 is connected through the first connecting part 105.

Optionally, as shown in FIG. 6b, the first connecting part 105 may be connected to a side wall 112 of the box body 11. In this case, at a position of the fixing plate 104 corresponding to the side wall 112, a first connecting part 105 may be formed by extending in a direction away from the battery module 100, that is, outwardly, and the wide wall 112 of the box body 11 is connected through the first connecting part 105. Optionally, a lower end of the fixing plate 104 may be higher than the bottom wall 111 and only needs to correspond to the connection position of the side wall 112. Certainly, the lower end of the fixing plate 104 may extend to the bottom wall 111, which is not limited in the present application.

The first connecting part 105 may be parallel to a wall of the connected box body 11. For example, the first connecting part 105 is parallel to the bottom wall of the box body 11. An area of the first connecting part 105 may be set according to the fixing manner with the wall of the connected box body 11 to meet the required fixing effect.

Optionally, in an embodiment of the present application, the first connecting part 105 may formed by bending the fixing plate 104. For example, the first connecting part 105 may be formed by bending an edge of the fixing plate 104 close to the connected wall in a direction away from the battery module 100. In an example of the bottom wall of the box body 11, a lower edge of the fixing plate 104 may be bent outward to form the first connecting part 105. In this way, the first connecting part 105 and a main body of the fixing plate 104 are an integral structure, which can enhance the connection performance.

Connecting a wall of the box body 11 through the first connecting part 105, can implement the fixed connection between the fixing plate 104 and the wall of the box body 11, so that the loads of the battery cells 20 can be transferred to the wall of the box body 11, thereby ensuring the structural strength of the battery 10.

Optionally, in an embodiment of the present application, the battery 10 may further include: a first connecting strip 13, the first connecting strip 13 extending in the second direction and being configured to connect a plurality of battery modules 100 in the box body 11. The first connecting strip 13 connects the plurality of battery modules 100 in the second direction, which could improve the overall structural strength of the plurality of battery modules 100.

In this case, the fixing plate 104 further includes a second connecting part 106 formed by extending in the first direction to a direction away from the battery module 100, and the second connecting part 106 is configured to connect the first connecting strip 13. Optionally, the second connecting part 106 and the first connecting part 105 may be respectively provided at both ends of the fixing plate 104. For example, when the first connecting part 105 is connected to the bottom wall of the box body 11, the second connecting part 106 may be provided at a position of the fixing plate 104 away from the bottom wall. That is, at the position of the fixing plate 104 away from the bottom wall, a second connecting part 106 may be formed by extending in a direction away from the battery module 100, that is, outwardly, and the first connecting strip 13 is connected through the second connecting part 106. Thus, the structural strength of the battery 10 can be further ensured at a position away from the bottom wall through the first connecting strip 13.

The second connecting part 106 may be parallel to the first connecting strip 13. An area of the second connecting part 106 may be set according to the fixing manner with the first connecting strip 13 to meet the required fixing effect.

Optionally, in an embodiment of the present application, the second connecting part 106 may formed by bending the fixing plate 104. For example, the second connecting part 106 may be formed by bending an edge of the fixing plate 104 close to the first connecting strip 13 in a direction away from the battery module 100. For example, an upper edge of the fixing plate 104 may be bent outward to form the second connecting part 106. In this way, the second connecting part 106 and the main body of the fixing plate 104 are an integral structure, which can enhance the connection performance.

Optionally, in an embodiment of the present application, the fixing plate 104 further includes a third connecting part 107 formed by extending in the first direction to a direction away from the battery module 100, and the third connecting part 107 is configured to connect the fixing plate 104 to the spacer plate 101. For example, at a position of the fixing plate 104 connected to the spacer plate 101, a third connecting part 107 may be formed by extending in a direction away from the battery module 100, that is, outwardly, and the fixing plate 104 is fixedly connected to the spacer plate 101 through the third connecting part 107.

Optionally, in addition to connecting the spacer plate 101, the third connecting part 107 may implement the connection to the fixing plate 104 at the same time. For example, each column of battery cells 20 in the battery module 100 is provided with one fixing plate 104, and the spacer plate 101 in the battery module 100 and two fixing plates 104 corresponding to two columns of battery cells 20 are fixed together through the third connecting part 107.

The third connecting part 107 may be parallel to the spacer plate 101. An area of the third connecting part 107 may be set according to the fixing manner to meet the required fixing effect.

Optionally, in an embodiment of the present application, the third connecting part 107 may formed by bending the fixing plate 104. For example, the third connecting part 107 may be formed by bending an edge of the fixing plate 104 close to the spacer plate 101 to a direction away from the battery module 100. In this way, the third connecting part 107 and the main body of the fixing plate 104 are an integral structure, which can enhance the connection performance.

Optionally, in an embodiment of the present application, the spacer plate 101 may be integrally molded with fixing plates 104 at both ends of one column of battery cells 20 in two adjacent columns of battery cells 20, so that only the other column of battery cells 20 is needed to be provided with fixing plates 104; or the spacer plate 101 may be integrally molded with fixing plates 104 corresponding to two adjacent columns of battery cells 20.

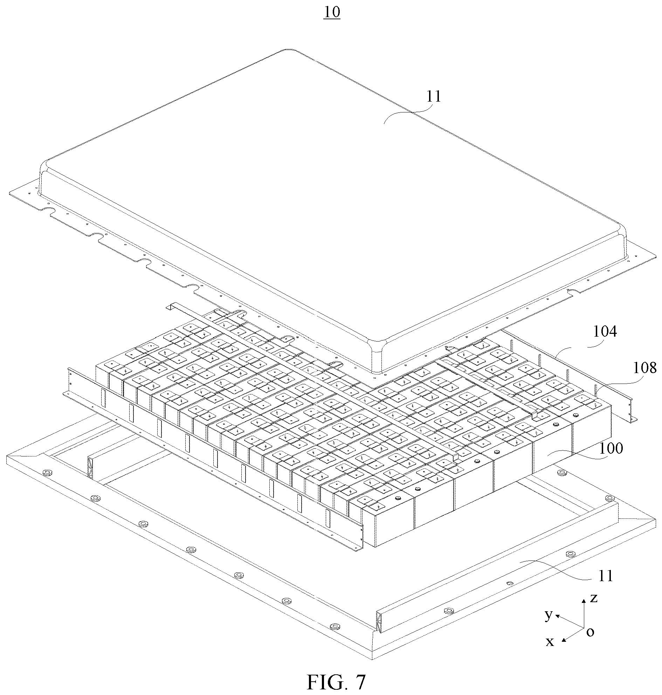

Optionally, in an embodiment of the present application, the fixing plate 104 corresponding to a plurality of battery modules 100 may be an integral structure. As shown in FIG. 7, the fixing plate 104 corresponding to the plurality of battery modules 100 may be a whole plate, and the plurality of battery modules 100 are fixed on the box body 11 through this whole plate, thereby improving the overall structural strength of the plurality of battery modules 100. Optionally, the fixing plate 104 may be provided with a restraint bar 108 corresponding to the battery module 100, and the restraint bar 108 is configured to be inserted into a gap between adjacent battery modules 100, so as to facilitate the installation of the battery modules 100.

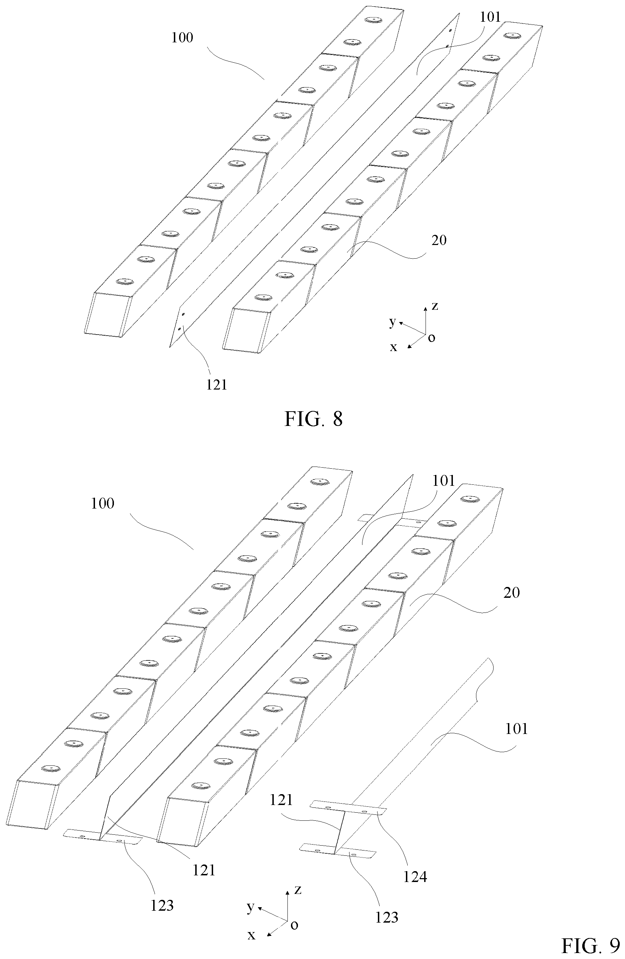

Optionally, in an embodiment of the present application, as shown in FIG. 8, the end part of the spacer plate 101 protrudes from the N columns of battery cells 20 in the first direction, and the fixing structure 102 includes a first protrusion portion 121 of the end portion of the spacer plate 101 that protrudes from the N columns of battery cells 20 in the first direction. The spacer plate 101 may be connected to a wall of the box body 11 through the first protrusion portion 121. For example, a connecting part corresponding to the first protrusion portion 121 may be provided on the wall of the box body 11 to implement the connection between the two.

Optionally, in an embodiment of the present application, as shown in FIG. 9, the fixing structure 102 further includes a first extending part 123, the first extending part 123 is fixedly connected to the first protrusion portion 121 and extends in the second direction, and the first extending part 123 is configured to connect a wall of the box body 11. For example, in an example of a bottom wall of the box body 11, at a position of the first protrusion portion 121 close to the bottom wall, the first extending part 123 is fixedly connected to the first protrusion portion 121 and extends in the second direction to form a region connected to the bottom wall, thereby connecting the bottom wall of the box body 11. Certainly, similar to the foregoing embodiment, the first extending part 123 of the fixing structure 102 may also be connected to a side wall of the box body 11, which is not limited in the present application.

The first extending part 123 may be parallel to a wall of the connected box body 11. For example, the first extending part 123 is parallel to the bottom wall of the box body 11. An area of the first extending part 123 may be set according to the fixing manner with the wall of the connected box body 11 to meet the required fixing effect.

Optionally, the first extending part 123 and the first protrusion portion 121 may be integrally molded, which can enhance the connection performance.

Optionally, in an embodiment of the present application, in a case that the battery 10 is provided with the first connecting strip 13, the fixing structure 102 further includes a second extending part 124, the second extending part 124 is fixedly connected to the first protrusion portion 121 and extends in the second direction, and the second extending part 124 is configured to connect the first connecting strip 13. For example, when the first extending part 123 is connected to the bottom wall of the box body 11, the second extending part 124 may be disposed at a position of the first protrusion portion 121 away from the bottom wall. That is, at a position of the first protrusion portion 121 away from the bottom wall, the second extending portion 124 is fixedly connected to the first protrusion portion 121 and extends in the second direction to form a region connected to the first connecting strip 13, thereby connecting the first connection strip 13. Thus, the structural strength of the battery 10 can be further ensured at a position away from the bottom wall through the first connecting strip 13.

The second extending part 124 may be parallel to the first connecting strip 13. An area of the second extending part 124 may be set according to the fixing manner with the first connecting strip 13 to meet the required fixing effect.

Optionally, the second extending part 124 and the first protrusion portion may 121 may be integrally molded, which may enhance the connection performance.

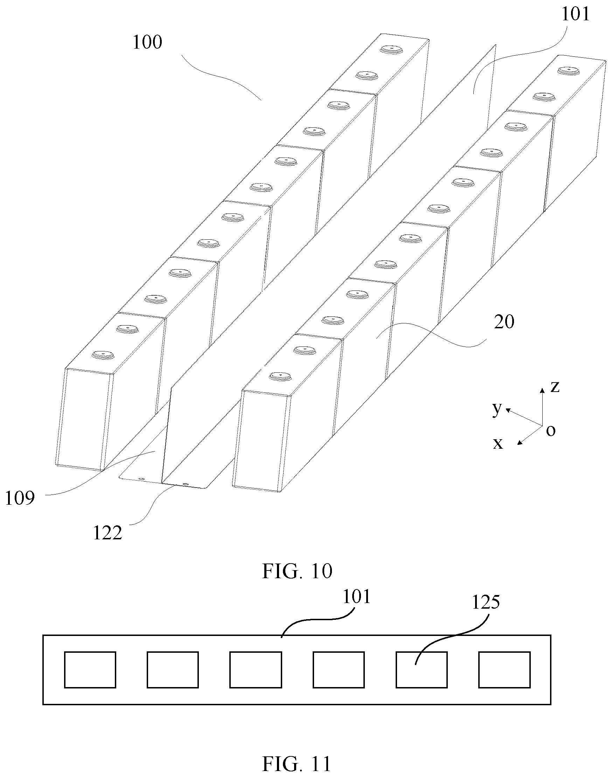

Optionally, in an embodiment of the present application, as shown in FIG. 10, the battery module 100 may further include: an attaching plate 109. The attaching plate 109 extends in the first direction and is fixedly connected to the spacer plate 101, and the attaching plate 109 protrudes from the spacer plate 101 in the second direction and is attached to each battery cell 20 in two adjacent columns of battery cells 20. For example, the attaching plate 109 may be vertically connected to the spacer plate 101, so that the spacer plate 101 is connected to a side wall of the battery cell 20, and the attaching plate 109 is connected to a bottom wall and/or a top wall of the battery cell 20, thereby further strengthening the fixing effect of the battery cell 20.

Optionally, the attaching plate 109 may be of the same material as the spacer plate 101, for example, metal, plastic or composite materials. A thickness of the attaching plate 109 may be the same as that of the spacer plate 101. The material or thickness of the attaching plate 109 may be different from that of the spacer plate 101, which is not limited in the embodiments of the present application.

Optionally, the attaching plate 109 may be fixedly connected to each battery cell 20 in two adjacent columns of battery cells 20. In this way, each battery cell 20 is fixed by the attaching plate 109 and the spacer plate 101, so that the fixing effect could be further improved.

Optionally, the attaching plate 109 and the battery cell 20 may be fixedly connected by means of bonding, such as by structural glue, which is not limited in the embodiments of the present application.

Optionally, in an embodiment of the present application, the attaching plate 109 protrudes from the N columns of battery cells 20 in the first direction, and the fixing structure 102 includes a second protrusion portion 122 of the attaching plate 109 that protrudes from the N columns of battery cells 20 in the first direction. The second protrusion portion 122 may be configured to connect a wall of the box body 11, for example, a bottom wall of the box body 11, so that the loads of the batter cells 20 can be transferred to the wall of the box body 11, thereby ensuring the structural strength of the battery 10. Certainly, the second protrusion portion 122 of the attaching plate 109 may also be connected to a side wall of the box body 11, which is not limited in the present application.

An area of the second protrusion portion 122 may be set according to the fixing manner with the wall of the box body 11 to be connected to meet the required fixing effect.

Optionally, in an embodiment of the present application, a cross-section shape of the spacer plate 101 and the attaching plate 109 perpendicular to the first direction may be inverted T-shaped, I-shaped, Z-shaped, S-shaped, T-shaped, C-shaped, L-shaped, or the like.

Specifically, when the cross-section shape of the spacer plate 101 and the attaching plate 109 perpendicular to the first direction is inverted T-shaped or L-shaped, the second protrusion portion 122 may be configured to connect the bottom wall of the box body 11; when it is I-shaped, Z-shaped, S-shaped, or C-shaped, the second protrusion portion 122 may be configured to connect a bottom wall of the box body 11 and the first connecting strip 13; and when it is T-shaped, the second protrusion portion 122 may be configured to connect a top wall of the box body 11 and/or the first connecting strip 13.

Optionally, in an embodiment of the present application, the spacer plate 101 and the attaching plate 109 may be integrally molded, which can improve the connection performance between the spacer plate 101 and the attaching plate 109. The spacer plate 101 and the attaching plate 109 may be connected in various fixing manners, which is not limited in the embodiments of the present application.

Optionally, in an embodiment of the present application, the battery cell 20 is a cuboid battery cell 20. The cuboid battery cell 20 includes two opposite first side walls and two opposite second side walls, and an area of a first side wall is larger than an area of a second side wall, that is, the first side wall is a wide side wall, and the second side wall is a narrow side wall. In this case, the spacer plate 101 is fixedly connected to the first side wall, that is, the wide side wall. That is, in this embodiment, narrow side walls of each column of battery cells 20 are connected so as to be arranged in a column in the first direction; and the spacer plate 101 is fixedly connected to a wide side wall of each battery cell 20. In this way, the spacer plate 101 can more easily receive the loads of the battery cells 20, so as to facilitate the transfer of the loads of the battery cells 20 to the box body.

Optionally, in an embodiment of the present application, as shown in FIG. 11, the spacer plate 101 may have a hole 125 provided correspondingly to the first side wall, and an area of the hole 125 is smaller than an area of the first side wall. In this way, a frame of each hole 125 may be fixedly connected to the first side wall of the battery cell 20. The hole 125 may be square or circular, which is not limited in the embodiments of the present application. Providing a hole 125 on the spacer plate 101 can reduce the material used for the spacer plate 101, thereby reducing the weight of the spacer plate 101.

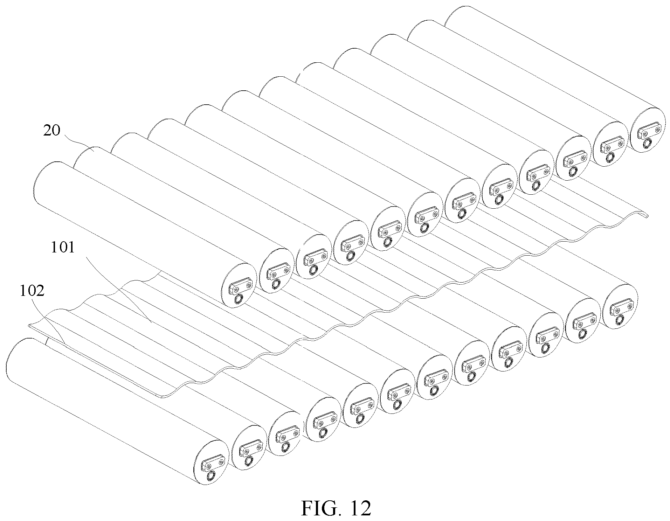

Optionally, in an embodiment of the present application, as shown in FIG. 12, the battery cell 20 may be a cylindrical battery cell 20. In this case, the spacer plate 101 may be an S-shaped spacer plate 101 adapted to a side face the cylindrical battery cell 20, so as to connect each battery cell 20 better.

It should be understood that, for FIG. 12, the corresponding fixing structure 102 may adopt the settings in the foregoing embodiments, which will not be repeated redundantly here for brevity.

Optionally, in an embodiment of the present application, the spacer plate 101 or the attaching plate 109 may be a heat-insulated plate. For example, the material of the spacer plate 101 or the attaching plate 109 may be a heat-insulated material, or a surface of the spacer plate 101 or the attaching plate 109 may be sprayed with a heat-insulated material, so that heat insulation between the battery cells 20 could be implemented while fixing the battery cells 20.

Optionally, in an embodiment of the present application, the spacer plate 101 or the attaching plate 109 may be a cooling plate or a heating plate. For example, a cooling flow channel or a heating resistance wire may be disposed in the spacer plate 101 or the attaching plate 109, so that cooling or heating the battery cells 20 could be implemented while fixing the battery cells 20.

Optionally, in an embodiment of the present application, the spacer plate 101 and the box body 11 may be integrally molded. For example, the spacer plate 101 may be extruded from the section material of the box body 11. In this way, the connection performance between the spacer plate 101 and the box body 11 can be improved.

Optionally, in an embodiment of the present application, the battery 10 further includes: a bus component 12. The bus component 12 is configured to be electrically connected to the battery cells 20. At least three battery cells 20 in the battery module 100 are connected to a battery cell 20 in another battery module 100 through the bus component 12. More battery cells 20 are connected to a battery cell 20 in another battery module 100 through the bus component 12, and the connection performance between the battery modules 100 can be enhanced through the bus component 12.

Optionally, the bus component 12 may connect the battery cells in series in the second direction. In a case that each column of battery cells 20 in the battery module 100 is arranged in the first direction, the bus component 12 connect the battery cells in series in the second direction, so that each pair of adjacent battery cells 20 between adjacent battery modules 100 are connected through the bus component 12, thereby enhancing the connection performance between the battery modules 100.

Optionally, in an embodiment of the present application, the battery 10 further includes: a second connecting strip 14. When the battery module 100 is disposed on a bottom wall of the box body 11, the second connecting strip 14 is disposed on a surface of the battery module 100 away from the bottom wall of the box body 11, and the second connecting strip 14 extends in the second direction, and is fixedly connected to a plurality of battery modules 100 in the box body 11. That is, the second connecting strip 14 is disposed on an upper surface of the battery module 100, so that the battery cell 20 can constrained in the second direction to enhance the structural strength of the battery 10, and an expansion force of the battery cell 20 can be resisted.

It should be understood that the relevant parts in various embodiments of the present application may be referred to each other, and for the sake of brevity, details are not be repeated redundantly.

An embodiment of the present application further provides a power consumption device, and the power consumption device may include the battery 10 in the foregoing embodiments. Optionally, the power consumption device may be a vehicle 1, a ship, a spacecraft, or the like, which is not limited in the embodiments of the present application.

The battery module 100, the battery 10 and the power consumption device according to the embodiments of the present application are described above. A method and device for producing a battery according to the embodiments of the present application will be described below, and for the parts that are not described in detail, reference is made to the foregoing embodiments.

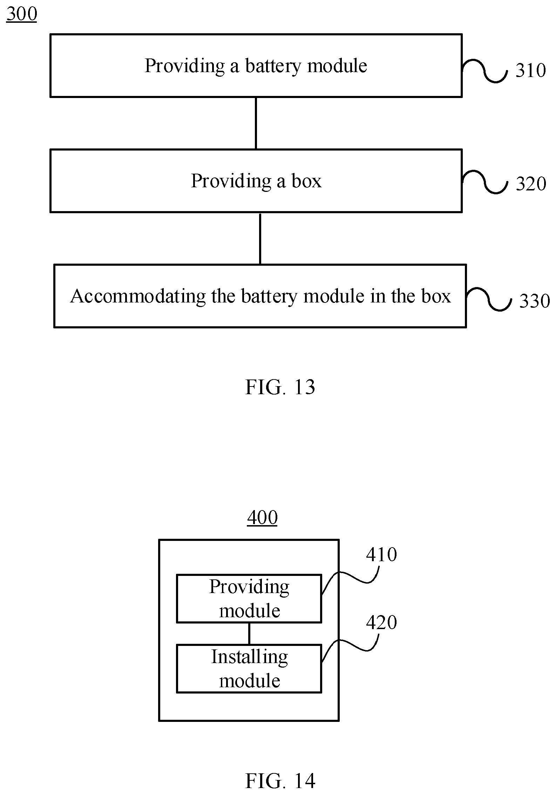

FIG. 13 shows a schematic flowchart of a method 300 for producing a battery according to an embodiment of the present application. As shown in FIG. 13, the method 300 may include:
310, providing a battery module 100, the battery module 100 including: N columns of battery cells 20, each column of battery cells 20 of the N columns of battery cells 20 including a plurality of battery cells 20 arranged in a first direction, the N columns of battery cells being arranged in a second direction, N being integer greater than 1, and the first direction being perpendicular to the second direction; and N-1 spacer plate(s) 101, a spacer plate 101 extending in the first direction and being disposed between two adjacent columns of battery cells 20, and the spacer plate 101 being fixedly connected to each battery cell 20 in the two columns of battery cells 20; where an end part of the spacer plate 101 in the first direction is provided with a fixing structure 102;
320, providing a box body 11; and
330, accommodating the battery module 100 in the box body 11, where the spacer plate 101 is fixed to the box body 11 through the fixing structure 102.

FIG. 14 shows a schematic block diagram of a device 400 for producing a battery according to an embodiment of the present application. As shown in FIG. 14, the device 400 for producing the battery may include: a providing module 410 and an installing module 420.

The providing module 410 is configured to provide a battery module 100 and a box body 11, and the battery module 100 includes: N columns of battery cells 20, each column of battery cells 20 of the N columns of battery cells 20 including a plurality of battery cells 20 arranged in a first direction, the N columns of battery cells 20 being arranged in a second direction, N being integer greater than 1, and the first direction being perpendicular to the second direction; and N-1 spacer plate(s) 101, a spacer plate 101 extending in the first direction and being disposed between two adjacent columns of battery cells 20, and the spacer plate 101 being fixedly connected to each battery cell 20 in the two columns of battery cells 20; where an end part of the spacer plate 101 in the first direction is provided with a fixing structure 102.

The installing module 420 is configured to accommodate the battery module 100 in the box body 11, where the spacer plate 101 is fixed to the box body 11 through the fixing structure 102.

The present application is not limited to the specific embodiments disclosed herein, and includes all technical solutions falling within the scope of the claims.

## Claims

1. A battery module (100), comprising:
N columns of battery cells (20), each column of battery cells (20) of the N columns of battery cells (20) comprising a plurality of battery cells (20) arranged in a first direction, the N columns of battery cells (20) being arranged in a second direction, N being an integer greater than 1, and the first direction being perpendicular to the second direction; and
N-1 spacer plate(s) (101), a spacer plate (101) extending in the first direction and being disposed between two adjacent columns of battery cells (20), and the spacer plate (101) being fixedly coupled to each battery cell (20) in the two columns of battery cells (20);
**characterized in that**
an end part of the spacer plate (101) in the first direction is provided with a fixing structure (102), and the fixing structure (102) is configured to fix the spacer plate (101) to a box body (11), wherein the box body (11) is configured to accommodate the battery module (100); and
the fixing structure (102) comprises a fixing plate (104), and the fixing plate (104) is fixedly coupled to the end part of the spacer plate (101), and is fixedly coupled to a battery cell (20) located at the end part of the spacer plate (101).

2. The battery module according to claim 1, wherein the fixing plate (104) comprises a first connecting part (105) formed by extending in the first direction to a direction away from the battery module (100), and the first connecting part (105) is configured to couple a wall of the box body (11).

3. The battery module according to claim 2, wherein the fixing plate (104) further comprises a second connecting part (106) formed by extending in the first direction to a direction away from the battery module (100), and the second connecting part (106) is configured to couple a first connecting strip (13), wherein the first connecting strip (13) is configured to couple a plurality of battery modules (100) in the box body (11).

4. The battery module according to claim 2 or 3, wherein the fixing plate (104) further comprises a third connecting part (107) formed by extending in the first direction to a direction away from the battery module (100), and the third connecting part (107) is configured to couple the fixing plate (104) to the spacer plate (101).

5. A battery module (100), comprising:
N columns of battery cells (20), each column of battery cells (20) of the N columns of battery cells (20) comprising a plurality of battery cells (20) arranged in a first direction, the N columns of battery cells (20) being arranged in a second direction, N being an integer greater than 1, and the first direction being perpendicular to the second direction; and
N-1 spacer plate(s) (101), a spacer plate (101) extending in the first direction and being disposed between two adjacent columns of battery cells (20), and the spacer plate (101) being fixedly coupled to each battery cell (20) in the two columns of battery cells (20);
**characterized in that**
an end part of the spacer plate (101) in the first direction is provided with a fixing structure (102), and the fixing structure (102) is configured to fix the spacer plate (101) to a box body (11), wherein the box body (11) is configured to accommodate the battery module (100); and
the end part of the spacer plate (101) protrudes from the N columns of battery cells (20) in the first direction, and the fixing structure (102) comprises a first protrusion portion (121) of the end portion of the spacer plate (101) that protrudes from the N columns of battery cells (20) in the first direction.

6. The battery module according to claim 5, wherein the fixing structure (102) further comprises a first extending part (123), the first extending part (123) is fixedly coupled to the first protrusion portion (121) and extends in the second direction, and the first extending part (123) is configured to couple a wall of the box body (11).

7. The battery module according to claim 6, wherein the fixing structure (102) further comprises a second extending part (124), the second extending part (124) is fixedly coupled to the first protrusion portion (121) and extends in the second direction, and the second extending part (124) is configured to couple a first connecting strip (13), wherein the first connecting strip (13) is configured to couple a plurality of battery modules (100) in the box body (11).

8. The battery module according to any one of claims 1 to 7, wherein the battery module (100) further comprises:
an attaching plate (109), the attaching plate (109) extending in the first direction and being fixedly coupled to the spacer plate (101), and the attaching plate (109) protruding from the spacer plate (101) in the second direction and being attached to each battery cell (20) in the two adjacent columns of battery cells (20).

9. The battery module according to claim 8, wherein the attaching plate (109) is fixedly coupled to each battery cell (20) in the two adjacent columns of battery cells (20).

10. The battery module according to claim 8 or 9, wherein the attaching plate (109) protrudes from the N columns of battery cells (20) in the first direction, and the fixing structure (102) comprises a second protrusion portion (122) of the attaching plate (109) that protrudes from the N columns of battery cells (20) in the first direction.

11. The battery module according to any one of claims 1 to 10, wherein a battery cell (20) is a cuboid battery cell (20), the cuboid battery cell (20) comprises two opposite first side walls and two opposite second side walls, an area of a first side wall is larger than an area of a second side wall, and the spacer plate (101) is fixedly coupled to the first side wall, and,
wherein preferably, the spacer plate (101) has a hole (125) provided correspondingly to the first side wall, and an area of the hole (125) is smaller than the area of the first side wall.

12. The battery module according to any of claims 1 to 10, wherein a battery cell (20) is a cylindrical battery cell (20), and the spacer plate (101) is an S-shaped spacer plate (101) adapted to a side face of the cylindrical battery cell (20).

13. A battery, comprising:
the battery module (100) according to any one of claims 1 to 12; and
a box body (11), the box body (11) being configured to accommodate the battery module (100).

14. The battery according to claim 13, wherein the battery module (100) is disposed on a bottom wall of the box body (11); and
the battery further comprises:
a second connecting strip (14) disposed on a surface of the battery module (100) away from the bottom wall of the box body (11), the second connecting strip (14) extending in the second direction, and being fixedly coupled to a plurality of battery modules (100) in the box body (11).

15. A power consumption device, comprising: the battery (10) according to any one of claims 13 or 14, the battery (10) being configured to provide electric energy.

## Patentansprüche

1. Batteriemodul (100), umfassend:
N Säulen von Batteriezellen (20), wobei jede Säule von Batteriezellen (20) der N Säulen von Batteriezellen (20) eine Mehrzahl von in einer ersten Richtung angeordneten Batteriezellen (20) umfasst, wobei die N Säulen von Batteriezellen (20) in einer zweiten Richtung angeordnet sind, wobei N eine ganze Zahl größer als 1 ist und die erste Richtung senkrecht zu der zweiten Richtung ist; und
N-1 Abstandsplatte(n) (101), wobei sich eine Abstandsplatte (101) in der ersten Richtung erstreckt und zwischen zwei benachbarten Säulen von Batteriezellen (20) angeordnet ist und die Abstandsplatte (101) mit jeder Batteriezelle (20) in den zwei Säulen von Batteriezellen (20) fest verbunden ist;
**dadurch gekennzeichnet, dass**
ein Endabschnitt der Abstandsplatte (101) in der ersten Richtung mit einer Befestigungsstruktur (102) versehen ist und die Befestigungsstruktur (102) dazu ausgelegt ist, die Abstandsplatte (101) an einem Gehäuse (11) zu befestigen, wobei das Gehäuse (11) dazu ausgelegt ist, das Batteriemodul (100) aufzunehmen; und
die Befestigungsstruktur (102) eine Befestigungsplatte (104) umfasst, und die Befestigungsplatte (104) mit dem Endabschnitt der Abstandsplatte (101) fest verbunden ist und mit einer an dem Endabschnitt der Abstandsplatte (101) angeordneten Batteriezelle (20) fest verbunden ist.

2. Batteriemodul nach Anspruch 1, wobei die Befestigungsplatte (104) einen ersten Verbindungsabschnitt (105) umfasst, der sich in der ersten Richtung in eine von dem Batteriemodul (100) weg weisende Richtung erstreckt, und der erste Verbindungsabschnitt (105) dazu ausgelegt ist, mit einer Wand des Gehäuses (11) gekoppelt zu werden.

3. Batteriemodul nach Anspruch 2, wobei die Befestigungsplatte (104) ferner einen zweiten Verbindungsabschnitt (106) umfasst, der sich in der ersten Richtung in eine von dem Batteriemodul (100) weg weisende Richtung erstreckt, und der zweite Verbindungsabschnitt (106) dazu ausgelegt ist, mit einer ersten Verbindungsleiste (13) gekoppelt zu werden, wobei die erste Verbindungsleiste (13) dazu ausgelegt ist, eine Mehrzahl von Batteriemodulen (100) in dem Gehäuse (11) zu koppeln.

4. Batteriemodul nach Anspruch 2 oder 3, wobei die Befestigungsplatte (104) ferner einen dritten Verbindungsabschnitt (107) umfasst, der sich in der ersten Richtung in eine von dem Batteriemodul (100) weg weisende Richtung erstreckt, und der dritte Verbindungsabschnitt (107) dazu ausgelegt ist, die Befestigungsplatte (104) mit der Abstandsplatte (101) zu koppeln.

5. Batteriemodul (100), umfassend:
N Säulen von Batteriezellen (20), wobei jede Säule von Batteriezellen (20) der N Säulen von Batteriezellen (20) eine Mehrzahl von in einer ersten Richtung angeordneten Batteriezellen (20) umfasst, wobei die N Säulen von Batteriezellen (20) in einer zweiten Richtung angeordnet sind, wobei N eine ganze Zahl größer als 1 ist und die erste Richtung senkrecht zu der zweiten Richtung ist; und
N-1 Abstandsplatte(n) (101), wobei sich eine Abstandsplatte (101) in der ersten Richtung erstreckt und zwischen zwei benachbarten Säulen von Batteriezellen (20) angeordnet ist und die Abstandsplatte (101) mit jeder Batteriezelle (20) in den zwei Säulen von Batteriezellen (20) fest verbunden ist;
**dadurch gekennzeichnet, dass**
ein Endabschnitt der Abstandsplatte (101) in der ersten Richtung mit einer Befestigungsstruktur (102) versehen ist und die Befestigungsstruktur (102) dazu ausgelegt ist, die Abstandsplatte (101) an einem Gehäuse (11) zu befestigen, wobei das Gehäuse (11) dazu ausgelegt ist, das Batteriemodul (100) aufzunehmen; und
der Endabschnitt der Abstandsplatte (101) in der ersten Richtung über die N Säulen von Batteriezellen (20) hervorsteht, und die Befestigungsstruktur (102) einen ersten Vorsprungsabschnitt (121) des Endabschnitts der Abstandsplatte (101) umfasst, der in der ersten Richtung über die N Säulen von Batteriezellen (20) hervorsteht.

6. Batteriemodul nach Anspruch 5, wobei die Befestigungsstruktur (102) ferner einen ersten Erstreckungsabschnitt (123) umfasst, wobei der erste Erstreckungsabschnitt (123) mit dem ersten Vorsprungsabschnitt (121) fest verbunden ist und sich in der zweiten Richtung erstreckt und der erste Erstreckungsabschnitt (123) dazu ausgelegt ist, mit einer Wand des Gehäuses (11) gekoppelt zu werden.

7. Batteriemodul nach Anspruch 6, wobei die Befestigungsstruktur (102) ferner einen zweiten Erstreckungsabschnitt (124) umfasst, wobei der zweite Erstreckungsabschnitt (124) mit dem ersten Vorsprungsabschnitt (121) fest verbunden ist und sich in der zweiten Richtung erstreckt und der zweite Erstreckungsabschnitt (124) dazu ausgelegt ist, mit einer ersten Verbindungsleiste (13) gekoppelt zu werden, wobei die erste Verbindungsleiste (13) dazu ausgelegt ist, eine Mehrzahl von Batteriemodulen (100) in dem Gehäuse (11) zu koppeln.

8. Batteriemodul nach einem der Ansprüche 1 bis 7, wobei das Batteriemodul (100) ferner umfasst:
eine Anbauplatte (109), wobei sich die Anbauplatte (109) in der ersten Richtung erstreckt und mit der Abstandsplatte (101) fest verbunden ist und die Anbauplatte (109) in der zweiten Richtung von der Abstandsplatte (101) hervorsteht und an jeder Batteriezelle (20) in den zwei benachbarten Säulen von Batteriezellen (20) befestigt ist.

9. Batteriemodul nach Anspruch 8, wobei die Anbauplatte (109) mit jeder Batteriezelle (20) in den zwei benachbarten Säulen von Batteriezellen (20) fest verbunden ist.

10. Batteriemodul nach Anspruch 8 oder 9, wobei die Anbauplatte (109) in der ersten Richtung über die N Säulen von Batteriezellen (20) hervorsteht und die Befestigungsstruktur (102) einen zweiten Vorsprungsabschnitt (122) der Anbauplatte (109) umfasst, der in der ersten Richtung über die N Säulen von Batteriezellen (20) hervorsteht.

11. Batteriemodul nach einem der Ansprüche 1 bis 10, wobei eine Batteriezelle (20) eine quaderförmige Batteriezelle (20) ist, wobei die quaderförmige Batteriezelle (20) zwei gegenüberliegende erste Seitenwände und zwei gegenüberliegende zweite Seitenwände umfasst, wobei eine Fläche einer ersten Seitenwand größer ist als eine Fläche einer zweiten Seitenwand und die Abstandsplatte (101) mit der ersten Seitenwand fest verbunden ist, und
wobei vorzugsweise die Abstandsplatte (101) eine Öffnung (125) aufweist, die der ersten Seitenwand entsprechend vorgesehen ist, und eine Fläche der Öffnung (125) kleiner ist als die Fläche der ersten Seitenwand.

12. Batteriemodul nach einem der Ansprüche 1 bis 10, wobei eine Batteriezelle (20) eine zylindrische Batteriezelle (20) ist und die Abstandsplatte (101) eine S-förmige Abstandsplatte (101) ist, die an eine Seitenfläche der zylindrischen Batteriezelle (20) angepasst ist.

13. Batterie, umfassend:
das Batteriemodul (100) nach einem der Ansprüche 1 bis 12; und
ein Gehäuse (11), wobei das Gehäuse (11) dazu ausgelegt ist, das Batteriemodul (100) aufzunehmen.

14. Batterie nach Anspruch 13, wobei das Batteriemodul (100) auf einer Bodenwand des Gehäuses (11) angeordnet ist; und
die Batterie ferner umfasst:
eine zweite Verbindungsleiste (14), die auf einer von der Bodenwand des Gehäuses (11) abgewandten Oberfläche des Batteriemoduls (100) angeordnet ist, wobei sich die zweite Verbindungsleiste (14) in der zweiten Richtung erstreckt und mit einer Mehrzahl von Batteriemodulen (100) in dem Gehäuse (11) fest verbunden ist.

15. Stromverbrauchsgerät, umfassend: die Batterie (10) nach Anspruch 13 oder 14, wobei die Batterie (10) dazu ausgelegt ist, elektrische Energie bereitzustellen.

## Revendications

1. Module de batterie (100), comprenant :
N colonnes de cellules de batterie (20), chaque colonne de cellules de batterie (20) des N colonnes de cellules de batterie (20) comprenant une pluralité de cellules de batterie (20) disposées dans une première direction, les N colonnes de cellules de batterie (20) étant disposées dans une deuxième direction, N étant un entier supérieur à 1, et la première direction étant perpendiculaire à la deuxième direction ; et
N-1 plaques entretoises (101), une plaque entretoise (101) s'étendant dans la première direction et étant disposée entre deux colonnes adjacentes de cellules de batterie (20), et la plaque entretoise (101) étant couplée fixement à chaque cellule de batterie (20) dans les deux colonnes de cellules de batterie (20) ;
**caractérisé en ce que**
une partie d'extrémité de la plaque entretoise (101) dans la première direction est pourvue d'une structure de fixation (102), et la structure de fixation (102) est configurée pour fixer la plaque entretoise (101) au boîtier (11), le boîtier (11) étant configuré pour loger le module de batterie (100) ; et
la structure de fixation (102) comprend une plaque de fixation (104), et la plaque de fixation (104) est couplée fixement à la partie d'extrémité de la plaque entretoise (101), et est couplée fixement à une cellule de batterie (20), située à la partie d'extrémité de la plaque entretoise (101).

2. Module de batterie selon la revendication 1, dans lequel la plaque de fixation (104) comprend une première partie de raccordement (105) formée par une extension dans la première direction en éloignement du module de batterie (100), et la première partie de raccordement (105) est configurée pour permettre le couplage d'une paroi du boîtier (11).

3. Module de batterie selon la revendication 2, dans lequel la plaque de fixation (104) comprend en outre une deuxième partie de raccordement (106) formée par une extension dans la première direction en éloignement du module de batterie (100), et la deuxième partie de raccordement (106) est configurée pour permettre le couplage d'une première bande de raccordement (13), la première bande de raccordement (13) étant configurée pour permettre le couplage d'une pluralité de modules de batterie (100) dans le boîtier (11).

4. Module de batterie selon la revendication 2 ou 3, dans lequel la plaque de fixation (104) comprend en outre une troisième partie de raccordement (107) formée par une extension dans la première direction en éloignement du module de batterie (100), et la troisième partie de raccordement (107) est configurée pour permettre le couplage de la plaque de fixation (104) à la plaque entretoise (101).

5. Module de batterie (100), comprenant :
N colonnes de cellules de batterie (20), chaque colonne de cellules de batterie (20) des N colonnes de cellules de batterie (20) comprenant une pluralité de cellules de batterie (20) disposées dans une première direction, les N colonnes de cellules de batterie (20) étant disposées dans une deuxième direction, N étant un entier supérieur à 1, et la première direction étant perpendiculaire à la deuxième direction ; et
N-1 plaques entretoises (101), une plaque entretoise (101) s'étendant dans la première direction et étant disposée entre deux colonnes adjacentes de cellules de batterie (20), et la plaque entretoise (101) étant couplée fixement à chaque cellule de batterie (20) dans les deux colonnes de cellules de batterie (20) ;
**caractérisé en ce que**
une partie d'extrémité de la plaque entretoise (101) dans la première direction est pourvue d'une structure de fixation (102), et la structure de fixation (102) est configurée pour fixer la plaque entretoise (101) au boîtier (11), le boîtier (11) étant configuré pour loger le module de batterie (100) ; et
la partie d'extrémité de la plaque entretoise (101) fait saillie des N colonnes de cellules de batterie (20) dans la première direction, et la structure de fixation (102) comprend une première partie saillante (121) de la partie d'extrémité de la plaque entretoise (101) qui fait saillie des N colonnes de cellules de batterie (20) dans la première direction.

6. Module de batterie selon la revendication 5, dans lequel la structure de fixation (102) comprend en outre une première partie d'extension (123), la première partie d'extension (123) étant couplée fixement à la première partie saillante (121) et s'étendant dans la deuxième direction, et la première partie d'extension (123) étant configurée pour permettre le couplage d'une paroi du boîtier (11).

7. Module de batterie selon la revendication 6, dans lequel la structure de fixation (102) comprend en outre une deuxième partie d'extension (124), la deuxième partie d'extension (124) étant couplée fixement à la première partie saillante (121) et s'étendant dans la deuxième direction, et la deuxième partie d'extension (124) étant configurée pour permettre le couplage d'une première bande de raccordement (13), la première bande de raccordement (13) étant configurée pour permettre le couplage d'une pluralité de modules de batterie (100) dans le boîtier (11).

8. Module de batterie selon l'une quelconque des revendications 1 à 7, lequel module de batterie (100) comprend en outre :
une plaque d'attache (109), la plaque d'attache (109) s'étendant dans la première direction et étant couplée fixement à la plaque entretoise (101), et la plaque d'attache (109) faisant saille de la plaque entretoise (101) dans la deuxième direction et étant attachée à chaque cellule de batterie (20) dans les deux colonnes adjacentes de cellules de batterie (20).

9. Module de batterie selon la revendication 8, dans lequel la plaque d'attache (109) est couplée fixement à chaque cellule de batterie (20) dans les deux colonnes adjacentes de cellules de batterie (20).

10. Module de batterie selon la revendication 8 ou 9, dans lequel la plaque d'attache (109) fait saillie des N colonnes de cellules de batterie (20) dans la première direction, et la structure de fixation (102) comprend une deuxième partie saillante (122) de la plaque d'attache (109) qui fait saillie des N colonnes de cellules de batterie (20) dans la première direction.

11. Module de batterie selon l'une quelconque des revendications 1 à 10, dans lequel une cellule de batterie (20) est une cellule de batterie cuboïde (20), la cellule de batterie cuboïde (20) comprend deux premières parois latérales opposées et deux deuxièmes parois latérales opposées, une aire d'une première paroi latérale étant plus grande qu'une aire d'une deuxième paroi latérale, et la plaque entretoise (101) étant couplée fixement à la première paroi latérale, et,
dans lequel, de préférence, la plaque entretoise (101) a un trou (125) prévu en correspondance de la première paroi latérale, et une aire du trou (125) est plus petite que l'aire de la première paroi latérale.

12. Module de batterie selon l'une quelconque des revendications 1 à 10, dans lequel une cellule de batterie (20) est une cellule de batterie cylindrique (20), et la plaque entretoise (101) es tune plaque entretoise en S (101) adaptée à une face latérale de la cellule de batterie cylindrique (20).

13. Batterie, comprenant :
le module de batterie (100) selon l'une quelconque des revendications 1 à 12 ; et
un boîtier (11), le boîtier (11) étant configuré pour loger le module de batterie (100).

14. Batterie selon la revendication 13, dans laquelle le module de batterie (100) est disposé sur une paroi de dessous du boîtier (11) ; et
la batterie comprend en outre :
une deuxième bande de raccordement (14) disposée sur une surface du module de batterie (100) éloignée de la paroi de dessous du boîtier (11), la deuxième bande de raccordement (14) s'étendant dans la deuxième direction, et étant couplée fixement à une pluralité de modules de batterie (100) dans le boîtier (11).

15. Appareil consommateur d'énergie, comprenant : la batterie (10) selon l'une quelconque des revendications 13 ou 14, la batterie (10) étant configurée pour fournir de l'énergie électrique.
